# EUROPÄISCHE PATENTSCHRIFT

(11) **EP 2 671 279 B1**
(45) Veröffentlichungstag und Bekanntmachung des Hinweises auf die Patenterteilung: **08.07.2015**
(21) Anmeldenummer: 12704000.4
(22) Anmeldetag: 31.01.2012
(51) Int. Cl.: H01M 8/04, B01J 47/02

(54) **IONENTAUSCHER ZUR AUFBEREITUNG EINES FLÜSSIGEN FLUIDS**
ION EXCHANGER FOR TREATING A LIQUID FLUID
ÉCHANGEUR D'IONS POUR LE TRAITMENT D'UN FLUIDE LIQUID

(30) Priorität: 31.01.2011 DE 102011009923
(43) Veröffentlichungstag der Anmeldung: 11.12.2013
(73) Patentinhaber: MANN + HUMMEL GMBH, 71638 Ludwigsburg (DE)
(72) Erfinder: BEYLICH, Markus, 71636 Ludwigsburg (DE); FASOLD, Michael, 71549 Auenwald (DE); NOURI, Jawad, 71672 Marbach (DE)
(74) Vertreter: Seyboth, Matthias
(86) Internationale Anmeldenummer: PCT/EP2012/051548
(87) Internationale Veröffentlichungsnummer: WO 2012/104294

(56) Entgegenhaltungen:
- EP-A1- 0 022 936
- EP-A1- 0 054 082
- DE-U1-202005 009 399
- US-A1- 2005 106 433

## Beschreibung

### Technisches Gebiet

Die Erfindung betrifft einen Ionentauscher zur Aufbereitung eines flüssigen Fluids eines Funktionssystems, insbesondere eines Kühlfluids einer Kühlvorrichtung, insbesondere eines Brennstoffzellensystems, insbesondere eines Kraftfahrzeugs, mit einem lonentauscherbehälter, der einen Einlass für aufzubereitendes Fluid und einen Auslass für aufbereitetes Fluid aufweist und in dem ein granulatartiges lonentauschermedium strömungstechnisch zwischen dem Einlass und dem Auslass angeordnet ist.

### Stand der Technik

Aus der EP 1 736 242 A2 ist ein lonentauscherbehälter zur Anwendung in einem Kraftfahrzeug bekannt, mit dem ein Wasseranteil in einer wässrigen Harnstofflösung, welche zur Sauerstoffreduzierung von Stickoxiden in den Abgasstrom eingespritzt wird, einer Entkalkung unterzogen wird. Der lonentauscherbehälter weist ein Gehäuse zur Aufnahme eines lonentauschermediums auf. Die wässrige Harnstofflösung wird über eine Zuflussleitung dem lonentauscherbehälter zugeführt und nach dem Durchströmen des lonentauschermediums über eine Abflussleitung wieder abgeleitet. Der lonentauscherbehälter umfasst zwei ineinander liegende Gehäuse, wobei das Innengehäuse das Ionentauschermedium aufnimmt. Die Harnstofflösung strömt durch eine im Boden des Innengehäuses befindliche Öffnung in den Innenraum des Innengehäuses ein. Sie durchströmt den Innenraum sowie das dort befindliche lonentauschermedium von unten nach oben und wird über einen zentralen Abströmstutzen in einem Deckelbereich des Innengehäuses in die Abflussleitung abgeleitet. Um das lonentauschermedium über den gesamten Querschnitt des Innengehäuses zu nutzen, sind der Einlass und der Auslass auf gegenüberliegenden Seiten des Innengehäuses angeordnet. Diese Anordnung muss bei der Wahl des Einbauraums für den Ionentauscher insbesondere in einem Kraftfahrzeug berücksichtigt werden. Die zur Aufbereitung des flüssigen Fluids durchströmte Länge des lonentauschermediums ist begrenzt durch den Abstand zwischen dem Einlass und dem Auslass.

Der Erfindung liegt die Aufgabe zugrunde, einen Ionentauscher der eingangs genannten Art zu gestalten, mit dem zuverlässig und effizient flüssiges Fluid aufbereitet werden kann, der einfach und an unterschiedliche Einbauräume und/oder Anwendungsbereiche angepasst werden kann.

### Offenbarung der Erfindung

Diese Aufgabe wird erfindungsgemäß dadurch gelöst, dass ein flexibler Beutel einen mäandrisch verlaufenden Kanal für das Fluid aufweist, der den Einlass mit dem Auslass verbindet und in dem sich das lonentauschermedium befindet.

Erfindungsgemäß ist also das lonentauschermedium in einem flexiblen Beutel angeordnet, welcher einfach in seiner Form und/oder Größe an den vorhandenen Bauraum angepasst werden kann. In dem Beutel ist ein mäandrisch verlaufender Kanal für das Fluid realisiert, welcher den Strömungsweg für das Fluid vorgibt. Die Länge des Kanals, welche von dem Fluid durchströmt werden muss, wird einfach durch die Anzahl der Windungen vorgegeben. Durch die Verlängerung des Strömungswegs wird die Austauschkapazität des Ionentauschers erhöht. Die Länge des Strömungswegs ist nicht begrenzt durch den Abstand zwischen dem Einlass und dem Auslass. Die durchströmbare Länge des Kanals im Verhältnis zu seinem Querschnitt ist größer, als bei dem aus dem Stand der Technik bekannten Ionentauscher. Die Bildung von bevorzugten Strömungswegen im lonentauschermedium durch das durchströmende Fluid wird so verringert. Dadurch, dass der Querschnitt des Kanals im Verhältnis zu dessen Länge im Vergleich zu dem aus dem Stand der Technik bekannten Ionentauscher verringert werden kann, ist nicht erforderlich, Maßnahmen zur Verteilung des aufzubereitenden Fluid über den Querschnitt zu ergreifen. Durch eine entsprechende Kanalführung können die Positionen des Einlasses und des Auslasses am Beutel freier vorgegeben werden, als dies bei dem aus dem Stand der Technik bekannten Ionentauscher der Fall ist. Darüber hinaus wirkt der mäandrische Verlauf des Kanals der Bildung von bevorzugten Strömungswegen im lonentauschermedium entgegen. Der flexible Beutel kann darüber hinaus einfach mit dem lonentauschermedium befüllt werden, was den Herstellungsaufwand verringert.

Der mäandrisch verlaufende Kanal weist zueinander parallele und aneinander angrenzende Kanalabschnitte auf.

Gemäß der Erfindung ist der Beutel zu einem etwa zylindrischen Körper aufgewickelt. Der Beutel kann so sehr kompakt gestaltet werden. Auf diese Weise kann der Platzbedarf für den Beutel weiter optimiert werden. Durch das aufwickeln kann das lonentauschermedium dicht gepackt werden, was der Bildung von bevorzugten Strömungswegen im lonentauschermedium durch das durchströmende Fluid beim Betrieb des Ionentauschers entgegen wirkt.

Vorteilhafterweise kann mit dem Beutel ein flächiges, flexibles Schutzmaterial, insbesondere ein elastisches Vlies, aufgewickelt sein. Das Schutzmaterial dient als zusätzliche Schutzlage, so dass die Außenflächen des Beutels nicht direkt aneinander liegen. Auf diese Weise wird verhindert, dass die Außenflächen des Beutels insbesondere infolge von Vibrationen aneinander reiben und durchgescheuert werden können.

Ferner kann vorteilhafterweise der aufgewickelte Beutel in eine elastische Stützhülle, insbesondere eine Kompressionshülle, eingepackt sein. Mit der Stützhülle kann das lonentauschermedium in Position gehalten werden, um zu verhindern, dass es im Beutel insbesondere aufgrund der Schwerkraft und/oder infolge von Vibrationen verrutscht. Außerdem kann durch die Stützhülle das lonentauschermedium verdichtet werden. Insbesondere können Hohlräume zwischen dem lonentauschermedium und den Innenseiten des Beutels verkleinert werden, so dass das lonentauschermedium direkt an den Innenseiten anliegt. Insgesamt wirkt die Stützhülle der Bildung von bevorzugten Strömungswegen im lonentauschermedium entgegen. Der zu einem zylindrischen Körper aufgewickelte Beutel kann einfach in die elastische Stützhülle eingebracht werden. Bei der Stützhülle kann es sich um ein elastisches Gewebe oder ein nicht gewebtes Material handeln. Sie Stützhülle kann netz- oder gitterartig ausgestaltet sein.

Bei einer weiteren vorteilhaften Ausführungsform kann der Beutel aus Kunststoff und der Kanal kann durch eine Mehrzahl von insbesondere parallelen Verbindungskurven, insbesondere Schweißnähten, begrenzt sein, entlang denen zwei gegenüberliegende Innenseiten des Beutels miteinander verbunden sind, und die sich wechselweise von einem ersten Rand des Beutels bis zu einem Abstand, welcher insbesondere der Breite des Kanals zwischen benachbarten Verbindungskurven entspricht, zu einem gegenüberliegenden zweiten Rand und von dem zweiten Rand bis zu einem Abstand, insbesondere dem gleichen Abstand, zu dem ersten Rand erstrecken. Auf diese Weise kann einfach und platzsparend ein vorzugsweise gleichmäßiger Strömungskanal realisiert werden. Kunststoff kann einfach bearbeitet werden, insbesondere geschweißt, geklebt oder geformt werden. Es kann gänzlich auf Metallteile verzichtet werden. So können keine Metallionen in das Fluid eingetragen werden. Der Verzicht auf Metall wirkt sich positiv aus in Hinblick auf ein späteres Recycling oder einer Entsorgung des lonentauschers. Anschlüsse für den Einlass und den Auslass können einfach an den Kunststoffbeutel insbesondere geschweißt oder geklebt werden. Sie können auch einstückig mit dem Beutel verbunden sein. Rückhalteinrichtungen, insbesondere Filter oder Siebe, können vorgesehen sein, mit denen verhindert werden kann, dass das lonentauschermedium durch den Einlass und/oder den Auslass aus dem Beutel entweicht. Die Rückhalteinrichtungen können einfach in dem Einlass und/oder dem Auslass integriert sein. Der Kunststoffbeutel kann einfach insbesondere aus einem endlos-Kunststoffschlauch hergestellt werden. Beim Herstellungsprozess kann der Kunststoffschlauch an einem Ende verschlossen und mit Schweißnähten entlang der Verbindungskurven versehen werden. Das offene Ende des Kunststoffschlauchs kann als eine Art Trichter wirken, durch den das lonentauschermedium in den Beutel eingefüllt werden kann. Nach dem Befüllvorgang kann der Beutel auf der offenen Seite verschlossen werden. Der Trichter kann abgetrennt werden.

Vorteilhafterweise können sich der Einlass und Auslass in der Nähe desselben Randes des Beutels befinden. Auf diese Weise können der Einlass und der Auslass platzsparend nebeneinander angeordnet werden. So kann der Ionentauscher einfach und platzsparend an unterschiedliche Funktionssysteme, insbesondere eine Kühlleitung einer Kühlvorrichtung, angepasst werden. Insbesondere können der Einlass und der Auslass so am Beutel angeordnet sein, dass sie sich nach dem aufwickeln auf derselben Stirnseite des Beutels befinden.

Bei einer weiteren vorteilhaften Ausführungsform kann der Beutel in einem vorzugsweise festen Schutzgehäuse angeordnet sein, welches insbesondere aus zwei Halbschalen zusammengesetzt sein kann. In dem Schutzgehäuse ist der aufgewickelte Beutel vor Umgebungseinflüssen, insbesondere mechanischen Belastungen, Temperatureinflüssen, Schmutz und/oder chemischen Stoffen, geschützt. Das Schutzgehäuse kann beim Auftreten eines Überdrucks den Beutel vor Zerstörung schützen. Der Beutel kann einfach zwischen den beiden Halbschalen eingesetzt werden, welche anschließend fest miteinander verbunden werden können. Das Schutzgehäuse kann statt aus zwei Halbschalen auch aus andersartigen verschließbaren Gehäusekörpern bestehen.

Vorteilhafterweise können Hohlräume zwischen dem Schutzgehäuse und dem Beutel mit einem vorzugsweise inkompressiblen Füllmedium, insbesondere Flüssigkeit oder einer Ausschäumung, gefüllt sein. Durch das Auffüllen von Hohlräumen wird die Druckbeständigkeit insbesondere des Beutels insbesondere gegenüber Überdruck weiter verbessert. Zum Einfüllen des Füllmediums kann wenigstens eine separate Einfüllöffnung im Schutzgehäuse vorgesehen sein, durch die nach dem Zusammenbau des Schutzgehäuses das Füllmedium eingefüllt und welche anschließend verschlossen werden kann. Durch das Auffüllen von Hohlräumen zwischen dem Beutel und dem Schutzgehäuse kann der Beutel im Schutzgehäuse fixiert werden. Auf diese Weise kann insbesondere ein Durchscheuern des Beutels am Schutzgehäuse und/oder ein aneinander anliegenden Beutelflächen verhindert werden.

Ferner kann vorteilhafterweise zwischen dem Beutel und dem Schutzgehäuse ein Scheuerschutzmittel insbesondere aus einem Thermoplast, vorzugsweise Polyethylen oder Polyurethan, angeordnet sein. Zwischen dem aufgewickelten Beutel und dem Schutzgehäuse kann ein Hohlraum vorgesehen sein, in welchen das Scheuerschutzmittel angeordnet ist. Mit dem Scheuerschutzmittel werden insbesondere Klebe- oder Schweißnähte des Beutels, welche ansonsten unmittelbar am Schutzgehäuse anliegen, gegen Durchscheuern, insbesondere infolge von Vibrationen, geschützt.

Im Übrigen kann vorteilhafterweise der Beutel mittels einer Zugentlastung an einem Anschlussabschnitt des Schutzgehäuses befestigt sein. Im Anschlussabschnitt können Schlauchanschlüsse für eine Zuleitung und eine Ableitung für das Fluid vorgesehen sein, welche mit dem Einlass bzw. dem Auslass des Beutels verbunden sind. Zur Verbesserung der mechanischen Stabilität, insbesondere der Druckbeständigkeit, und zum Erhalt der Konsistenz des lonentauschermediums kann der Teil des Beutels, in dem sich der Einlass und der Auslass befinden, über eine Vergussmasse mit dem Anschlussabschnitt verbunden sein.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Explosionsdarstellung einiger Bauteile eines Ionentauschers für ein Kühlfluid einer Kühlvorrichtung eines Brennstoffzellensystems, bei dem ein Beutel mit einem lonentauschergranulat zu einem Zylinder aufgewickelt ist;
- Figur 2: den Beutel des Ionentauschers aus Figur 1 in entrolltem Zustand;
- Figur 3: den Beutel aus den Figuren 1 und 2 während einer Herstellungsphase;
- Figur 4: einen Teilschnitt des zusammengebauten Ionentauschers aus Figur 1, bei dem der Beutel aus den Figuren 1 bis 3 mit Schlauchanschlüssen versehen und mit Zugentlastungen mit einem Anschlussabschnitt eines Gehäuses des Ionentauschers verbunden ist;
- Figur 5: schematisch eine Detailansicht eines der Schlauchanschlüsse aus Fig. 4.

In den Figuren sind gleiche Bauteile mit gleichen Bezugszeichen versehen.

### Ausführungsform(en) der Erfindung

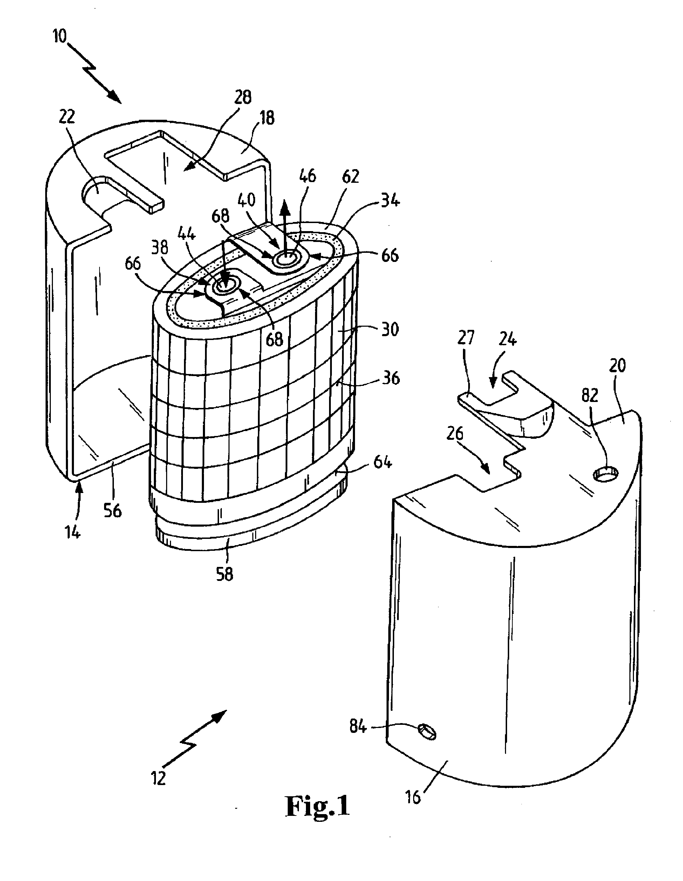

In Figur 1 ist eine Explosionsdarstellung einige Bauteile eines Ionentauschers 10 zur Aufbereitung eines Kühlfluids einer ansonsten nicht gezeigten Kühlvorrichtung eines Brennstoffzellensystems eines Kraftfahrzeugs gezeigt.

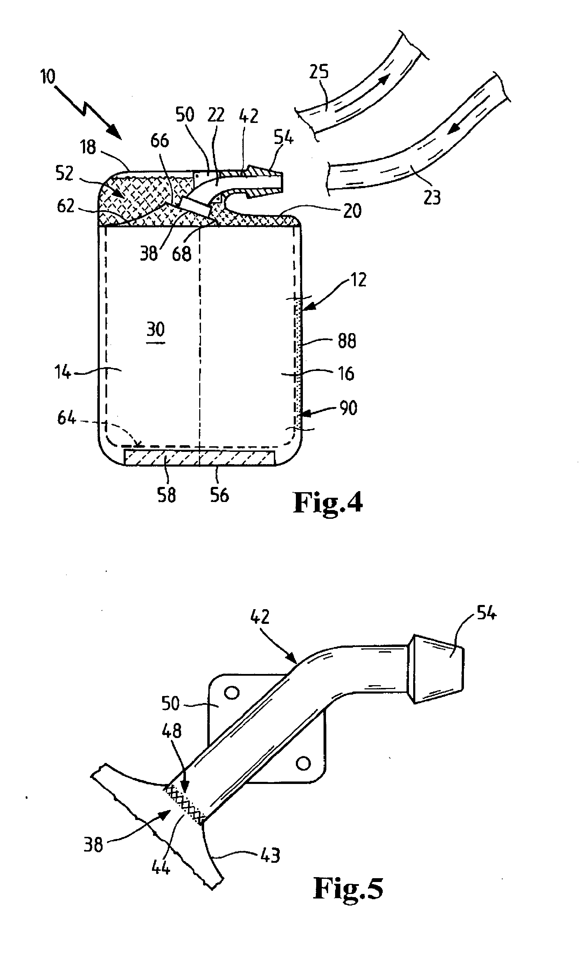

Der Ionentauscher 10 umfasst ein Schutzgehäuse 12 aus einem festen Kunststoff, welches aus zwei Halbschalen 14 und 16 zusammengesetzt ist. Zusammengebaut hat das Schutzgehäuse 12, in der Figur 4 gezeigt, eine zylindrische Form.

Ein Anschlussabschnitt 18 der in Figur 1 hinteren Halbschale 14 weist in Figur 1 oben einen Zuleitungsanschlussdurchlass 22 für einen in den Figuren 4 und 5 gezeigten Schlauchanschluss 42 für eine dort gezeigte Zuleitung 23 für aufzubereitendes Kühlfluid auf. Ein Ableitungsanschlussdurchlass 24 für eine Schlauchanschluss 42 für eine Ableitung 25 für aufbereitetes Kühlfluid ist in einem Anschlussabschnitt 20 der Halbschale 16 angeordnet.

Der Zuleitungsanschlussdurchlass 22 ist seitlich zu dem Rand der Halbschale 14, welcher im montierten Zustand mit der Halbschale 16 verbunden ist, hin offen. In dem Anschlussabschnitt 20 in der Halbschale 16 ist eine Ausnehmung 26 vorgesehen, die mit der offenen Seite des Zuleitungsanschlussdurchlasses 22 fluchtet.

Ein Bereich 27 des Anschlussabschnitts 20 mit dem Ableitungsanschlussdurchlass 24 überragt den Rand der Halbschale 16, welcher der Halbschale 14 zugewandt ist. Im Anschlussabschnitt 18 der hinteren Halbschale 14 ist eine zweite Ausnehmung 28 vorgesehen, welche zu dem hervor stehenden Bereich 27 komplementär ist. Im montierten Zustand greift der Bereich 27 in die zweite Ausnehmung 28 ein. Auf diese Weise wird eine Verzahnung realisiert, welche das Schutzgehäuse 12 im montierten Zustand stabilisiert. Zusätzlich dient die Verzahnung als Führungshilfe bei der Montage.

Auch der Ableitungsanschlussdurchlass 24 ist auf seiner der Halbschale 14 zugewandten Seite offen. Dadurch, dass der Ableitungsanschlussdurchlass 24 und der Zuleitungsanschlussdurchlass 22 seitlich offen sind, können die Schlauchanschlüsse 42 einfach von der Seite eingeschoben werden.

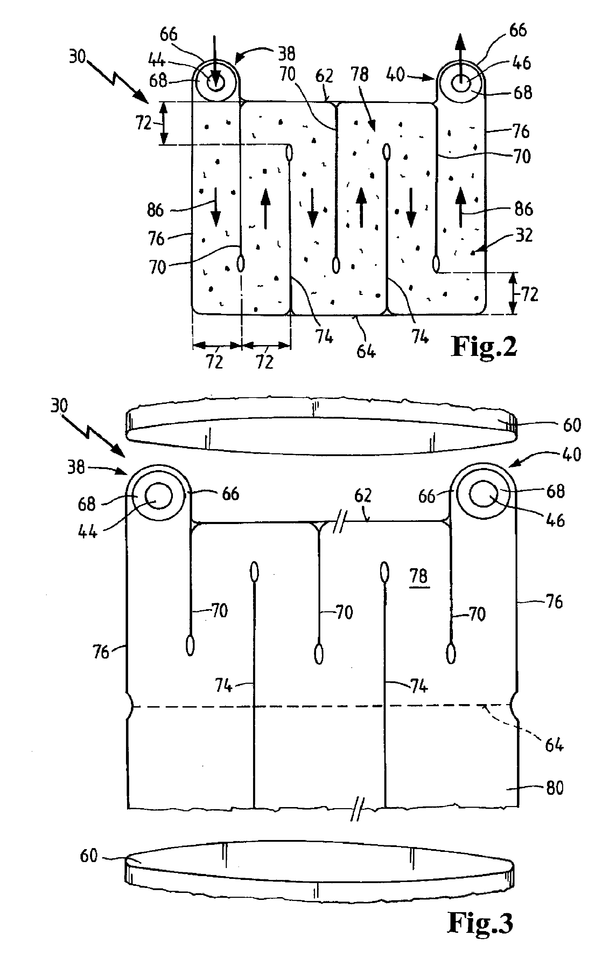

In dem Schutzgehäuse 12 ist ein flexibler Beutel 30 aus einer elastischen Kunststofffolie angeordnet, in dem sich ein lonentauschergranulat 32 befindet. Die Wirkungsweise des lonentauschergranulats 32 ist hinreichend bekannt. Das lonentauschergranulat 32 ist in der Figur 2 angedeutet. Dort ist der Beutel 30 entrollt gezeigt.

Der Beutel 30 ist zu einem, in der Figur 1 gezeigten, zylindrischen Körper aufgewickelt. Mit dem Beutel 30 ist ein flächiges, flexibles Schutzmaterial in Form eines Vlieses 34 aufgewickelt, welches die Außenseiten des Beutels 30 vor Durchscheuern schützen soll. Der mit dem Vlies 34 aufgewickelte Beutel 30 ist in einer elastischen Stützhülle 36 aus einen elastischen Gewebe eingepackt. Die Stützhülle 36, welche in der Figur 1 als eine Art Netz angedeutet ist, hat die Funktion eine Kompressionshülle. Sie hält den aufgewickelten Beutel 30 in seiner Form stabil und komprimiert ihn und das enthaltene Ionentauschergranulat 32.

Ein Einlass 38 für aufzubereitendes Kühlfluid und ein Auslass 40 für aufbereitetes Kühlfluid befinden sich an der den Anschlussabschnitten 18 und 20 des Schutzgehäuses 12 zugewandten Stirnseite des aufgewickelten Beutels 30. Im montierten Zustand des Ionentauschers 10 korrespondiert der Einlass 38 mit dem Zuleitungsanschlussdurchlass 22 und der Auslass 40 korrespondiert mit dem Ableitungsanschlussdurchlass 24.

Am Einlass 38 und am Auslass 40 ist jeweils ein Schlauchanschluss 42 vorgesehen. Der Schlauchanschluss 42 des Einlasses 38 ist in den Figuren 4 und 5 gezeigt. Die Schlauchanschlüsse 42 verfügen jeweils über eine Schweißringscheibe 43. Mit der Schweißringscheibe 43 ist der Schlauchanschluss 42 mit einer jeweiligen Schweißfläche 68 des Beutels 30 verschweißt, der eine Einlassöffnung 44 des Einlasses 38 bzw. eine Auslassöffnung 46 des Auslass 40 umgibt. In jedem Schlauchanschluss 42 ist ein Sieb 48 angeordnet, mit welchem verhindert wird, dass lonentauschergranulat 32 durch den Schlauchanschluss 42 aus dem Beutel 30 heraus gelangen kann.

Die Schlauchanschlüsse 42 weisen jeweils eine Zugentlastung 50 auf, mit der sie im Anschlussabschnitt 18 der Halbschale 14 befestigt sind. Die Schlauchanschlüsse 42 und der den Anschlussabschnitten 18 und 20 zugewandte Teil des aufgewickelten Beutels 30 sind ferner in den Anschlussabschnitten 18 und 20 mit einer Vergussmasse 52 vergossen. Dadurch wird die mechanische Festigkeit, insbesondere die Druckbeständigkeit, des Ionentauschers 10 erhöht und die Konsistenz des lonentauschergranulats 32 erhalten.

Jeder Schlauchanschluss 42 ist an seinem freien Ende zu einem keilförmig zulaufenden Schnellanschluss 54 ausgestaltet, auf den die Zuleitung 23 bzw. Ableitung 25 aufgesteckt und beispielsweise mit einer Schlauchschelle fixiert werden kann.

Zwischen einer dem Einlass 38 und dem Auslass 40 gegenüberliegenden bodenseitigen Stirnseite des aufgewickelten Beutels 30 und einem Boden 56 des Schutzgehäuses 12 ist eine Schutzplatte 58 aus Polyethylen angeordnet. Mit der Schutzplatte 58 werden Schweißnähte an einem Bodenstirnrand 64 des Beutels 30 vor Durchscheuern, beispielsweise durch Vibrationen, geschützt.

Der Beutel 30 ist aus einem in Figur 3 angedeuteten, flachgedrückten 10 Kunststoffschlauch 60 gefertigt. Der Kunststoffschlauch 60 ist an beiden offenen Enden verschweißt, welche, wie in Figur 2 gezeigt, einen Anschlussstirnrand 62 und den Bodenstirnrand 64 des insgesamt etwa rechteckigen Beutels 30 bilden.

Der Anschlussstirnrand 62 ist im Bereich von Seitenrändern 76 des Beutels 30 zu Anschlusslaschen 66 geformt. In den Anschlusslaschen 66 befinden sich die Einlassöffnung 44 und die Auslassöffnung 46 und die jeweiligen Schweißflächen 68.

Von dem Anschlussrand 62 erstrecken sich drei durchgängige, zu den Seitenrändern 76 parallele Schweißnähte 70 in Richtung auf den Bodenstirnrand 64 zu. Mit den Schweißnähten 70 sind die beiden gegenüberliegenden Innenseiten des Kunststoffschlauchs 60 miteinander verbunden. Die Schweißnähte 70 enden in einem Abstand 72 von dem Bodenstirnrand 64.

Von dem Bodenstirnrand 64 erstrecken sich zwei Schweißnähte 74, welche zu den Schweißnähten 70 parallel sind, in Richtung auf den Anschlussstirnrand 62 zu. Sie enden ebenfalls im Abstand 72 von dem Anschlussstirnrand 62. Die Schweißnähte 74 befinden sich mittig zwischen jeweils zwei benachbarten Schweißnähten 70.

Ein Abstand zwischen benachbarten Schweißnähten 70 und 74 und die Abstände zwischen den äußeren Schweißnähten 70 und Seitenrändern 76 des Beutels 30 entsprechen dem Abstand 72. Insgesamt ist ein mäandrisch verlaufender Strömungskanal 78 für das Kühlfluid realisiert, der über seine gesamte Strömungslänge eine gleichmäßige Breite hat, welche dem Abstand 72 entspricht. Der Strömungskanal 78 verbindet den Einlass 38 mit dem Auslass 40. In dem Strömungskanal 78 befindet sich das lonentauschergranulat 32.

Zur Herstellung des Beutels 30 wird der Kunststoffschlauch 60 flachgedrückt und an einem offenen Ende zur Bildung des Anschlussstirnrands 62 und den Anschlusslaschen 66 mit durchgängig dichten Schweißnähten versehen. Die gegenüberliegenden Innenseiten des Beutels 30 werden mit den parallelen Schweißnähte 70 und 74 durchgängig dicht verbunden. Dabei überragen die Schweißnähte 74 den späteren Bodenstirnrand 64, der in Figur 3 gestrichelt angedeutet ist.

Der Beutel 30 wird in einem Abstand zu dem späteren Bodenstirnrand 64 auf der dem Anschlussstirnrand 62 gegenüberliegenden Seite von dem Kunststoffschlauch 60 abgetrennt. Ein Abschnitt zwischen dem späteren Bodenstirnrand 64 und dem offenen Ende des Beutels 30 dient als Trichterabschnitt 80.

Anschließend wird der Beutel 30 so angeordnet, dass die offene Seite des Trichterabschnitts 80 räumlich oben ist. Das lonentauschergranulat 32 wird in den Trichterabschnitt 80 eingefüllt, bis die Zwischenräume zwischen den Schweißnähten 70 und 74, welche den Strömungskanal 78 bilden, bis zum späteren Bodenstirnrand 64 mit lonentauschergranulat 32 gefüllt sind.

Sodann wird der Beutel 30 entlang der in Figur 3 gestrichelt angedeuteten Linie durchgängig dicht verschweißt. Der Trichterabschnitt 80 wird abgetrennt.

Das Vlies 34 wird flächig auf den Beutel 30 aufgelegt und mit diesem zu dem zylindrischen Körper zusammengerollt. Anschließend wird der zusammengerollte Beutel 30 in die Stützhülle 36 gesteckt.

Die Schlauchanschlüsse 42 werden mit der Schweißringscheibe in 43 an die Schweißfläche 68 des Einlasses 38 und des Auslasses 40 geschweißt.

Der zusammengerollten Beutel 30 wird unter Zwischenlage der Schutzplatte 58 in die Halbschale 14 gelegt, so dass die Schlauchanschlüsse 42 durch den Ableitungsanschlussdurchlass 24 und den Zuleitungsanschlussdurchlass 22 führen. Die Zugentlastungen 50 der Schlauchanschluss 42 werden mit dem Anschlussabschnitt 18 verbunden. Die Halbschale 16 wird aufgesteckt und mit der Halbschale 16 verschweißt.

Über eine in der Figur 1 in der Halbschale 16 gezeigte Einfüllöffnung 82 wird aushärtende Vergussmasse in den Hohlraum zwischen dem Anschlussstirnrand 62 des Beutels 30 und den Anschlussabschnitten 18 und 20 der Halbschalen 14 und 16 eingefüllt. Die Einfüllöffnung 82 wird anschließend verschlossen.

Über eine zweite Einfüllöffnung 84 wird ein aushärtender Schaum 88 eingefüllt, mit welchem, wie in der Figur 2 angedeutet, Hohlräume 90 zwischen dem Schutzgehäuse 12 und dem aufgerollten Beutel 30 und Hohlräume zwischen den Wicklungen des Beutels 30 gefüllt werden. Die zweite Einfüllöffnung 84 wird anschließend geschlossen.

Beim Betrieb des Ionentauschers 10 strömt das aufzubereitende Kühlfluid aus der Einleitung 23 über den einlassseitigen Schlauchanschluss 42 in den Einlass 38. Das Kühlfluid strömt durch den Strömungskanal 78 in Richtung von in der Figur 2 gezeigten Pfeilen 86. Es durchströmt so das lonentauschergranulat 32 und wird in bekannter Weise aufbereitet.

Das aufbereitete Kühlfluid verlässt den Beutel 30 durch den Auslass 40 und strömt durch den auslassseitigen Schlauchanschluss 42 aus dem Schutzgehäuse 12 heraus in die Ableitung 25 der Kühlvorrichtung.

Bei allen oben beschriebenen Ausführungsbeispielen eines Ionentauschers 10 sind unter anderen folgenden Modifikationen möglich:

Die Erfindung ist nicht beschränkt auf einen Ionentauscher 10 von Kühlvorrichtungen von Brennstoffzellen von Kraftfahrzeugen. Vielmehr kann sie auch bei Ionentauschern von andersartigen Funktionssystemen zur Aufbereitung von anderen flüssigen Fluiden, beispielsweise bei Ionentauschern zur Deionisierung von Wasser bei Funkenerodiermaschinen, bei stationären Brennstoffzellenanwendungen oder zur Aufbereitung von wässriger Harnstofflösung, welche beispielsweise zur Sauerstoffreduktion von Stickoxiden in den Abgasstrom einer Brennkraftmaschine eingespritzt wird, verwenden werden. Auch kann die Erfindung bei der Aufbereitung von Trinkwasser, Kühlwasser, Kesselwasser oder einem andersartigen Brauchwasser eingesetzt werden.

Statt aus einer elastischen Kunststofffolie kann der Beutel 30 auch aus einer nicht elastischen, aber flexiblen Kunststofffolie sein.

Auf die Vergussmasse 52 zum Vergießen der Schlauchanschlüsse 42 mit den Anschlussabschnitten 18 und 20 kann auch verzichtet werden.

Anstelle der Schnellverschlüsse 54 können auch andersartige Schlauchanschlüsse, beispielsweise Schraubanschlüsse, zur Verbindung mit der Zuleitung 23 und der Ableitung 25 vorgesehen sein.

Statt der Siebe 48 können auch andersartige Sieb- oder Filtermittel vorgesehen sein, um zu verhindern, dass lonentauschergranulat 32 aus dem Beutel 30 entweicht. Die Siebe 48 können statt in den Schlauchanschlüssen 42 auch am Beutel 30 angeordnet sein.

Die Schutzplatte 58 kann statt aus Polyethylen auch aus einem andersartigen Schutzmaterial, vorzugsweise einem Thermoplast, beispielsweise Polyurethan, sein.

Bei einer vereinfachten Ausführungsform des Ionentauschers 10 kann auf das Schutzvlies 34 und/oder die Schutzplatte 58 auch verzichtet werden.

Auf das Ausschäumen der Hohlräume 90 zwischen dem Schutzgehäuse 12 und dem Beutel 30 und/oder zwischen den Windungen des Beutels 30 über die zweite Einfüllöffnung 84 kann auch verzichtet werden. Anstelle des aushärtenden Schaums kann auch ein anderes im Endzustand inkompressibles Medium, beispielsweise eine Flüssigkeit, vorzugsweise eine gleichteilige Mischung aus Wasser und Glykol, verwendet werden.

Der mäandrisch verlaufende Strömungskanal 78 kann auch durch mehr oder weniger als fünf Schweißnähte 70 und 74 realisiert sein.

Die Schweißnähte 70 und 74 können statt in Form von parallelen Geraden auch als wenigstens zum Teil nichtparallele Geraden oder Kurven realisiert sein.

Der Strömungskanal 78 kann statt über seine Strömungslänge auch Erweiterungen und/oder Verengungen aufweisen.

Der Einlass 38 und Auslass 40 können statt in der Nähe des Anschlussstirnrandes 62 auch an gegenüberliegenden Stirnrändern oder Seitenrändern oder auch innerhalb der Beuteloberfläche zwischen den Stirnrändern und den Seitenrändern angeordnet sein.

Auf die elastische Stützhülle 36 kann bei einer vereinfachten Ausführungsform auch verzichtet werden.

Der Beutel 30 kann statt zu einem zylindrischen Körper aufgerollt, auch in anderer Weise geformt, beispielsweise gefaltet, sein.

Das Schutzgehäuse 12 kann statt aus zwei Halbschalen 14 und 16 zusammengesetzt, auch in axialer Richtung aus zwei Teilen, beispielsweise einem Gehäusetopf und einem Deckel gefertigt sein. Das Schutzgehäuse kann auch aus mehr als zwei Teilen bestehen.

Die Halbschalen 14 und 16 können statt miteinander verschweißt auch in anderer Weise miteinander verbunden, beispielsweise miteinander verklebt, verschraubt oder verklipst sein.

Anstelle der Schweißnähte 70 und 74 und den Schweißnähten am Anschlussstirnrand 62 und am Bodenstirnrand 64 können auch andersartige durchgängige Verbindungen der Beutelinnenflächen, beispielsweise Verklebungen, vorgesehen sein.

## Patentansprüche

1. Ionentauscher (10) zur Aufbereitung eines flüssigen Fluids eines Funktionssystems, insbesondere eines Kühlfluids einer Kühlvorrichtung, insbesondere eines Brennstoffzellensystems, insbesondere eines Kraftfahrzeugs, mit einem lonentauscherbehälter (30), der einen Einlass (38) für aufzubereitendes Fluid und einen Auslass (40) für aufbereitetes Fluid aufweist und in dem ein granulatartiges Ionentauschermedium (32) strömungstechnisch zwischen dem Einlass (38) und dem Auslass (40) angeordnet ist, wobei der lonentauscherbehälter als flexibler Beutel (30) ausgebildet ist, wobei der flexible Beutel (30) einen mäandrisch verlaufenden Kanal (78) für das Fluid aufweist, der den Einlass (38) mit dem Auslass (40) verbindet und in dem sich das lonentauschermedium (32) befindet, wobei der mäandrisch verlaufende Kanal zueinander parallele und aneinander angrenzende Kanalabschnitte aufweist, **dadurch gekennzeichnet, dass** der Beutel (30) zu einem etwa zylindrischen Körper aufgewickelt ist.

2. Ionentauscher nach Anspruch 1, **dadurch gekennzeichnet, dass** mit dem Beutel (30) ein flächiges, flexibles Schutzmaterial, insbesondere ein Vlies (34), aufgewickelt ist.

3. Ionentauscher nach Anspruch 1 oder 2, **dadurch gekennzeichnet, dass** der aufgewickelte Beutel (30) in eine elastische Stützhülle, insbesondere eine Kompressionshülle (36), eingepackt ist.

4. Ionentauscher nach einem der vorigen Ansprüche, **dadurch gekennzeichnet, dass** der Beutel (30) aus Kunststoff ist und der Kanal (78) durch eine Mehrzahl von insbesondere parallelen Verbindungskurven, insbesondere Schweißnähten (68, 70), begrenzt ist, entlang denen zwei gegenüberliegende Innenseiten des Beutels (30) miteinander verbunden sind, und die sich wechselweise von einem ersten Rand (62) des Beutels (30) bis zu einem Abstand (72), welcher insbesondere der Breite des Kanals (78) zwischen benachbarten Verbindungskurven (68, 70) entspricht, zu einem gegenüberliegenden zweiten Rand (64) und von dem zweiten Rand (64) bis zu einem Abstand, insbesondere dem gleichen Abstand (72), zu dem ersten Rand (62) erstrecken.

5. Ionentauscher nach einem der vorigen Ansprüche, **dadurch gekennzeichnet, dass** sich der Einlass (38) und Auslass (40) in der Nähe desselben Randes (62) des Beutels (30) befinden.

6. Ionentauscher nach einem der vorigen Ansprüche, **dadurch gekennzeichnet, dass** der Beutel (30) in einem vorzugsweise festen Schutzgehäuse (12) angeordnet ist, welches insbesondere aus zwei Halbschalen (14, 16) zusammengesetzt ist.

7. Ionentauscher nach Anspruch 6, **dadurch gekennzeichnet, dass** Hohlräume (90) zwischen dem Schutzgehäuse (12) und dem Beutel (30) mit einem vorzugsweise inkompressiblen Füllmedium, insbesondere Flüssigkeit oder einer Ausschäumung (88), gefüllt sind.

8. Ionentauscher nach Anspruch 6 oder 7, **dadurch gekennzeichnet, dass** zwischen dem Beutel (30) und dem Schutzgehäuse (12) ein Scheuerschutzmittel (58) insbesondere aus einem Thermoplast, vorzugsweise Polyethylen oder Polyurethan, angeordnet ist.

9. Ionentauscher nach einem der Ansprüche 6 bis 8, **dadurch gekennzeichnet, dass** der Beutel (30) mittels einer Zugentlastung (50) an einem Anschlussabschnitt (18) des Schutzgehäuses (12) befestigt ist.

## Claims

1. Ion exchanger (10) for treating a liquid fluid of a functional system, in particular of a cooling fluid of a cooling device, in particular of a fuel-cell system, in particular of a motor vehicle, with an ion exchanger tank (30) which features an inlet (38) for fluid to be treated and an outlet (40) for treated fluid and in which a granular ion exchanger medium (32) is disposed fluidically between the inlet (38) and the outlet (40), wherein the ion exchanger tank is designed as flexible bag (30), wherein the flexible bag (30) features a meandering channel (78) for the fluid which connects the inlet (38) with the outlet (40) and in which is located the ion exchanger medium (32), wherein the meandering channel features parallel and adjacent channel sections, **characterized in that** the bag (30) is wound to form an approximate cylindrical body.

2. Ion exchanger according to claim 1, **characterized in that** a flat, flexible protective material, in particular a fleece (34), is wound together with the bag (30).

3. Ion exchanger according to claim 1 or 2, **characterized in that** the wound bag (30) is packed into a resilient supporting sleeve, in particular a compression sleeve (36).

4. Ion exchanger according to one of the above claims, **characterized in that** the bag (30) is made of synthetic material and that the channel (78) is defined by a plurality of in particular parallel connecting curves, in particular weld seams (68, 70) along which two opposing interior sides of the bag (30) are connected with each other and which extend alternately from the first edge (62) of the bag (30) until a distance (72), which corresponds in particular to the width of the channel (78) between adjacent connecting curves (68, 70), to an opposing second edge (64) and from the second edge (64) until a distance, in particular the same distance (72), to the first edge (62).

5. Ion exchanger according to one of the above claims, **characterized in that** the inlet (38) and the outlet (40) are located near the same edge (62) of the bag (30).

6. Ion exchanger according to one of the above claims, **characterized in that** the bag (30) is disposed preferably in a fixed protective casing (12) which is in particular made of two half shells (14, 16).

7. Ion exchanger according to claim 6, **characterized in that** hollow spaces (90) between the protective casing (12) and the bag (30) are filled with a preferably incompressible filler medium, in particular with liquid or foam (88).

8. Ion exchanger according to claim 6 or 7, **characterized in that** between the bag (30) and the protective casing (12) is disposed an abrasion protection means (58), in particular thermoplastic, preferably polyurethane.

9. Ion exchanger according to one of the claims 6 to 8, **characterized in that** the bag (30) is attached to a connection section (18) of the protective casing (12) by means of a strain relief (50).

## Revendications

1. Échangeur d'ions (10) pour le traitement d'un fluide liquide d'un système fonctionnel, notamment d'un liquide de refroidissement d'un dispositif de refroidissement, notamment d'un système de pile à combustible, notamment d'un véhicule automobile, avec un réservoir d'échangeur d'ions (30) qui présente une entrée (38) pour le fluide à traiter et une sortie (40) pour le fluide traité et dans lequel un milieu granuleux d'échangeur d'ions (32) est disposé, au niveau de l'écoulement, entre l'entrée (38) et la sortie (40), le réservoir d'échangeur d'ions étant exécuté en tant que sachet flexible (30), le sachet flexible (30) étant pourvu d'un canal (78) pour le fluide évoluant en forme de méandres qui relie l'entrée (38) à la sortie (40) et dans lequel se trouve le milieu d'échangeur d'ions (32), le canal en forme de méandres présentant des sections parallèles et adjacentes, **caractérisé en ce que** le sachet (30) est enroulé et forme un corps approximativement cylindrique.

2. Échangeur d'ions selon la revendication 1, **caractérisé en ce qu**'un matériau protecteur plane et flexible, notamment un non-tissé (34), est enroulé avec le sachet (30).

3. Échangeur d'ions selon la revendication 1 ou 2, **caractérisé en ce que** le sachet enroulé (30) est emballé dans une gaine de soutien élastique, en particulier une housse de compression (36).

4. Échangeur d'ions selon l'une des revendications précédentes, **caractérisé en ce que** le sachet (30) est en matière plastique et que le canal (78) est limité par une pluralité de courbes de liaison en particulier parallèles, en particulier par des cordons de soudure (68, 70), le long desquelles deux faces intérieures opposées du sachet (30) sont reliées l'une à l'autre, et qui s'étendent en alternance d'un premier bord (62) du sachet (30), jusqu'à une distance (72) qui correspond en particulier à la largeur du canal (78) entre des courbes de liaison adjacentes (68, 70), à un deuxième bord opposé (64) et du deuxième bord (64), jusqu'à une distance, notamment la même distance (72), au premier bord (62).

5. Échangeur d'ions selon l'une des revendications précédentes, **caractérisé en ce que** l'entrée (38) et la sortie (40) se trouvent à proximité du même bord (62) du sachet (30).

6. Échangeur d'ions selon l'une des revendications précédentes, **caractérisé en ce que** le sachet (30) est disposé dans un boîtier de protection (12) de préférence rigide qui est composé en particulier de deux semi-coques (14, 16).

7. Échangeur d'ions selon la revendication 6, **caractérisé en ce que** des espaces creux (90) situés entre le boîtier de protection (12) et le sachet (30) sont remplis d'un milieu de préférence incompressible, notamment de liquide ou de mousse (88).

8. Échangeur d'ions selon la revendication 6 ou 7, **caractérisé en ce qu'**un moyen de protection contre l'abrasion (58), notamment constitué d'une matière thermoplastique, de préférence de polyéthylène ou de polyuréthane, est disposé entre le sachet (30) et le boîtier de protection (12).

9. Échangeur d'ions selon l'une des revendications 6 à 8, **caractérisé en ce que** le sachet (30) est fixé au moyen d'un dispositif de reprise de traction (50) à une section de raccordement (18) du boîtier de protection (12).
